# EUROPEAN PATENT APPLICATION

(11) **EP 1 796 407 A1**
(43) Date of publication of application: **13.06.2007**
(21) Application number: 06025460.4
(22) Date of filing: 08.12.2006
(51) Int. Cl.: H04Q 7/28, H04Q 7/38, H04Q 7/22

(54) **Call setup method for minimizing call setup delay in mobile telecommunications system and apparatus thereof**

(30) Priority: 08.12.2005 KR 20050119774
(71) Applicant: Samsung Electronics Co., Ltd., Suwon-si, Gyeonggi-Do (KR)
(72) Inventor: Kim, Soeng-Hun c/oSamsung Electronics Co., Ltd., Suwon-si Gyeonggi-do (KR); Choi, Sung-Ho c/oSamsung Electronics Co., Ltd., Suwon-si Gyeonggi-do (KR); Song, O-Sok c/oSamsung Electronics Co., Ltd., Suwon-si Gyeonggi-do (KR); Van Lieshout, Gert Van c/oSamsung Electricity Research Inst., Staines Middlesex TW18 4QE (GB); Van der Velde, Himke c/oSamsung Electricty Research Inst. Inst., Staines Middlesex TW18 4QE (GB)
(74) Representative: Grünecker, Kinkeldey, Stockmair & Schwanhäusser Anwaltssozietät

(57) **Abstract**

A call setup method and apparatus for minimizing call setup delay by a UE in a mobile telecommunications system are provided. The method includes the steps of: if call setup for a packet call service is requested, determining by the UE if the requested service is a predetermined service sensitive to call setup delay; if the requested packet call service is the predetermined service sensitive to the call setup delay, establishing control information representing that the packet call service is sensitive to the call setup delay; and transmitting a request message requesting the call setup to a network, the request message including the control information. In the method, a network causes a UE using a packet call service sensitive to call setup delay to maintain a connected state, so that restart delay of the packet call service can be minimized.

## Description

### BACKGROUND OF THE INVENTION

### Field of the Invention:

The present invention relates to a mobile telecommunications system. More particularly, the present invention relates to a call setup method for efficiently supporting a service sensitive to call setup delay, and an apparatus thereof.

### Description of the Related Art:

Universal Mobile Telecommunication Service (UMTS) systems (3G mobile telecommunications systems) may be based on Global for Mobile Communications (GSM) and General Packet Radio Services (GPRS). These systems may use Wideband Code Division Multiple Access (WCDMA) and provide cell phones or computer users with a consistent service capable of transmitting packet-based text, digitalized voice or video and multimedia data at a high speed of more than 2Mbps regardless of the global positions of the users, the GSM and GPRS corresponding to a mobile telecommunications system in Europe. A UMTS employs a concept of virtual access, such as access of a packet switched scheme using a packet protocol such as an Internet Protocol (IP). Also, a UMTS may always access any terminations within a network.

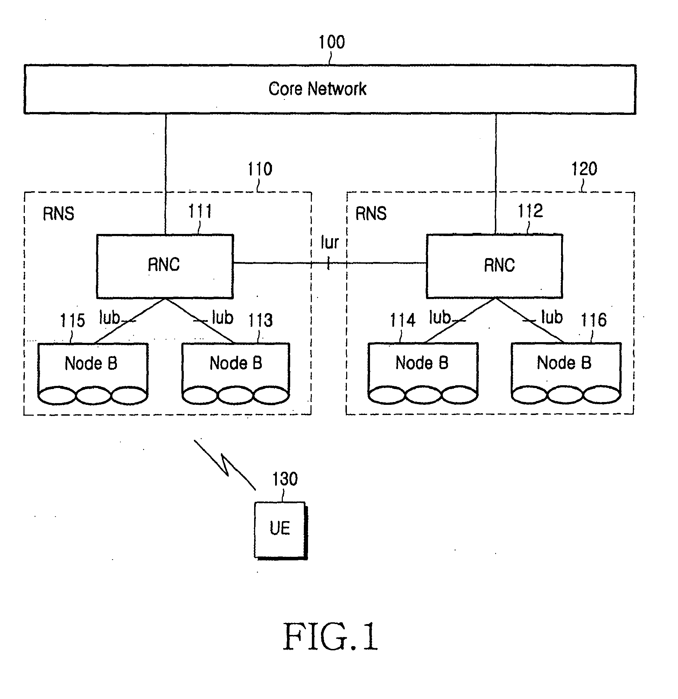

FIG. 1 is a block diagram schematically illustrating the structure of a typical UMTS system.

Referring to FIG. 1, the UMTS system includes a Core Network (CN) 100 and multiple Radio Network Subsystems (RNSs) 110 and 120. The RNSs 110 and 120 form a UMTS Terrestrial Radio Access Network (UTRAN). The CN 100 includes a Serving GPRS Support Node (SGSN), and a Gateway GPRS Support Node (GGSN), among others, in order to connect the UTRAN to a packet data network such as the Internet.

The RNS 110 includes a Radio Network Controller (RNC) 111 and multiple Node Bs 113 and 115, and the RNS 120 includes an RNC 112 and multiple Node Bs 114 and 116. The RNCs 111 and 112 may be classified as serving RNCs, drift RNCs or control RNCs according to the roles thereof. The serving RNC manages information of each User Equipment (UE) and takes charge of data transmission with the CN 100, the drift RNC directly accesses a UE 130 in a wireless manner, and the control RNC controls radio resources of each Node B.

The RNC 111 is connected to the Node Bs 113 and 115 through an interface referred to as a lub, and the RNC 112 is connected to the Node Bs 114 and 116 through a lub interface. The RNCs 111 and 112 are interconnected through a lur interface. Although not illustrated in FIG. 1, the UE 130 is connected to a UTRAN through a Uu interface. The RNCs 111 and 112 allocate radio resources to the Node Bs 113 to 116 managed by the RNCs 111 and 112, and the Node Bs 113 to 116 actually provide the UE 130 with the radio resources allocated by the RNCs 111 and 112. The radio resources are formed according to cells, and the radio resources provided by each Node B denote radio resources for a specific cell managed by a corresponding Node B. The UE 130 establishes a radio channel by using the radio resources for a specific cell managed by the Node Bs 113 to 116, and transmits/receives data through the established radio channel. Since the UE 130 recognizes only a physical channel formed according to cells, it is unnecessary to distinguish a Node B from a cell. In the following description, a Node B is used together with a cell.

Different system times among Node Bs may be used in a synchronous UMTS network. Call setup time is too long since a UE must establish various control connections including signaling connection, among others, for the network in order to acquire system time of a Node B which the UE first accesses. Therefore, various schemes have been proposed in order to solve this problem. The necessity for reduction of call setup time is required in a packet call such as Voice over IP (VoIP) or Push to talk over Cellular (PoC). This is because the packet call uses a user plane bearer for transmission/reception of a control message such as a call setup message.

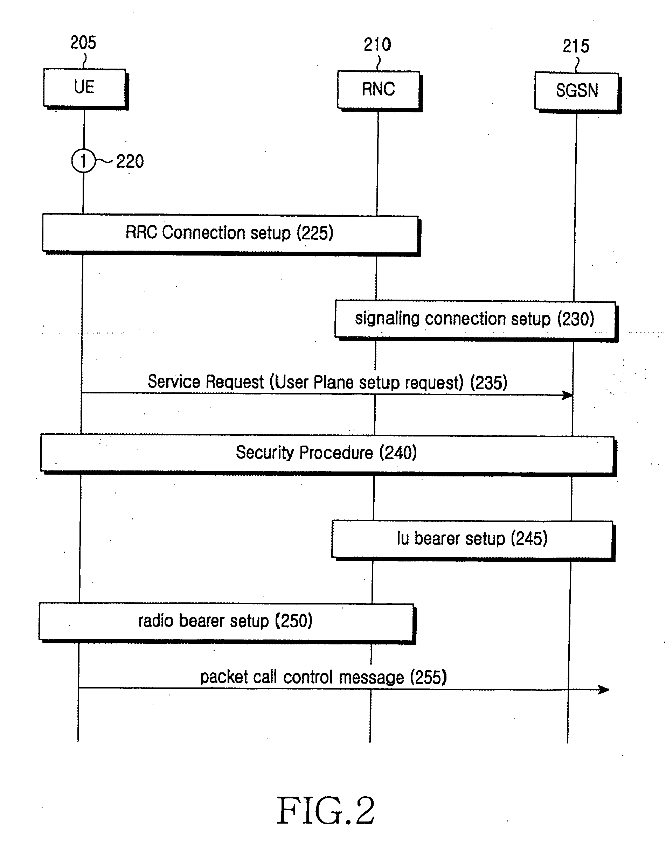

FIG. 2 is a diagram illustrating a setup process of a packet call in a typical UMTS system.

In step 220 of FIG. 2, a packet call setup control message is generated in a UE 205. In step 225, the UE 205 establishes a Radio Resource Control-(RRC) connection with an RNC 210. For example, the packet call setup control message includes a Session Initialization Protocol (SIP) message such as INVITE. The RRC connection is a control connection established between the UE 205 and the RNC 210, which is used in order to exchange a control message between the UE 205 and the RNC 210. When the RRC connection has not been established between the UE 205 and the RNC 210, is the UE 205 is considered to be in an idle state. However, when the RRC connection has been established between the UE 205 and the RNC 210, the UE 205 is regarded as being in an RRC connected state.

If the RRC connection setup is completed, the RNC 210 and an SGSN 215 establish a signaling connection, such as a control connection, in step 230. If the control connection is completely established between the UE 205 and the RNC 210/the SGSN 215, the UE 205 transmits a SERVICE REQUEST message to the SGSN 215 through the control connection in order to establish a user plane for transmitting/receiving the packet call setup control message in step 235. In step 240, the SGSN 215 sends a SECURITY MODE COMMAND message to the RNC 210 and the UE 205, thereby performing a security procedure. Through the security procedure, the RNC 210 and the UE 205 share a ciphering key, among others, to be used for the user plane later.

If the security procedure is completed, the SGSN 215 establishes a lu bearer which is a user plane used for transmitting/receiving the packet call setup control message to/from the RNC 210, in step 245. In step 250, the RNC 210 establishes a radio bearer for a user plane used in order to transmit/receive the packet call setup control message to/from the UE 205.

If both the lu bearer and the radio bearer are established, the UE 205 transmits the packet call setup control message generated in step 220 through the radio bearer and the lu bearer of the user plane in step 255. The packet call setup control message is transferred to the destination of a packet data network via the RNC 210 and the SGSN 215.

As described above, since the packet call setup control message is transmitted through the user plane, a considerable delay exists between the time point at which the packet call setup control message has been generated and the time point at which the packet call setup control message is actually transmitted. This is inconvenient for a user using a service sensitive to call setup time as in the case of PoC.

Accordingly, there is a need for an improved method and apparatus for minimizing call setup delay for services that are sensitive to call setup delays in mobile telecommunications systems.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a method and an apparatus for minimizing call setup delay for a service sensitive to the call setup delay in a mobile telecommunications system.

According to another object of an exemplary embodiment of the present invention, a call setup method is provided to rapidly transmit a packet call setup control message in a mobile telecommunications system, and an apparatus thereof.

It is further another object of an exemplary embodiment of the present invention to provide a call setup method to cause a UE to maintain a connected state by informing a network that the UE is using a service sensitive to call setup delay in a mobile telecommunications system, and an apparatus thereof.

In accordance with one aspect of an exemplary embodiment of the present invention, a call setup method is provided to minimize call setup delay by a UE in a mobile telecommunications system. The UE determines whether a requested packet call service is a predetermined service sensitive to call setup delay. If the requested packet call service is the predetermined service sensitive to the call setup delay, control information is established to represent that the packet call service is sensitive to the call setup delay. A request message, which includes control information, that requests the call setup is transmitted to a network.

In accordance with another aspect of an exemplary embodiment of the present invention, a call setup method for minimizing call setup delay by a network node in a mobile telecommunications system is provided. A request message requesting call setup for a packet call service is received from a UE. A user bearer is established to transmit/receive user data of the packet call service. A determination is made as to whether the requested packet call service is a predetermined service sensitive to call setup delay according to control information included in the request message. If the requested packet call service is the predetermined service sensitive to the call setup delay, the user bearer is maintained until release of the requested packet call service is required even when there is no data transmission/reception related to the packet call service.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other exemplary objects, features and advantages of certain exemplary embodiments of the present invention will be more apparent from the following description taken in conjunction with the accompanying drawings, in which:
FIG. 1 is a block diagram schematically illustrating the structure of a typical UMTS mobile telecommunications system;
FIG. 2 is a diagram illustrating a packet call setup process in an asynchronous mobile telecommunications system;
FIG. 3 is a ladder diagram illustrating a packet call setup process by a UE in an RRC connected state in an asynchronous mobile telecommunications system according to an exemplary embodiment of the present invention;
FIG. 4 is a ladder diagram illustrating an entire operation according to an exemplary embodiment of the present invention;
FIG. 5 is a flow diagram illustrating an operation of a UE according to an exemplary embodiment of the present invention;
FIG. 6 is a block diagram illustrating the structure of a UE transmitter according to an exemplary embodiment of the present invention;
FIG. 7 is a block diagram illustrating the structure of a RNC receiver according to an exemplary embodiment of the present invention; and
FIG. 8 is a flow diagram illustrating the operation of an SGSN according to an exemplary embodiment of the present invention.

Throughout the drawings, the same drawing reference numerals will be understood to refer to the same elements, features and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

According to an exemplary embodiment of the present invention, a UE maintains a connected state in order to support a packet call service sensitive to call setup delay such as VoIP and PoC in a mobile telecommunications system supporting a packet call, wherein the UE uses the packet call service sensitive to call setup delay.

In the following detailed description of an exemplary embodiment of the present invention, a UMTS system is used, which employs an asynchronous Wideband Code Division Multiple Access (WCDMA) communication scheme. However, the subject matter of an exemplary embodiment of the present invention can be applied to other mobile telecommunications systems with similar technical backgrounds and channel type with slight modifications, without departing from the scope and spirit of the invention. This will be possible by the judgment of those skilled in the field of the present invention.

The following steps are required until a UE in an idle state completes the setup of a user plane necessary for transmitting/receiving a packet call setup control message.
- RRC connection setup
- signaling connection setup
- security procedure
- lu bearer setup
- radio bearer setup

When a UE is in a connected state such as a Cell-Paging Channel (CELL_PCH) state and a UTRAN Registration Area-Paging Channel (URA_PCH) state, some of the steps are not necessary.

The CELL_PCR state and the URA_PCH state are examples of an RRC connected state, which is defined in order to efficiently support a service in which user data is intermittently generated. In the CELL_PCH state and the URA_PCH state, RRC connection and signaling connection are maintained between a UE and a network. A lu bearer and a radio bearer are also maintained, but radio resources are not actually allocated to the RRC connection and the radio bearer. A UE in the CELL_PCH state transmits a CELL UPDATE to an RNC when moving to a new cell while monitoring a PCH. A UE which is in the URA_PCH state transmits a URA UPDATE to an RNC when moving to a new URA while monitoring a PCH. The URA is a set of cells, which prevents frequent cell change reports of a UE which frequently moves. According to an exemplary implementation, a connected state denotes a CELL_PCB state or a URA_PCH state without a separate description.

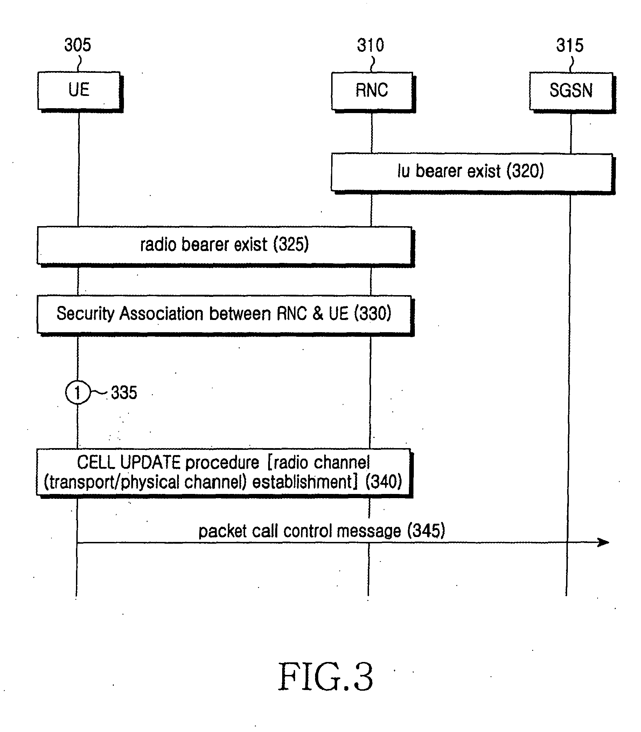

FIG. 3 is a ladder diagram illustrating an operation by which a UE in a connected state such as a CELL_PCH state or a URA_PCH state transmits a packet call setup control message according to an exemplary embodiment of the present invention.

- Referring to FIG. 3, a UE 305 establishes a lu bearer between an RNC 310 and an SGSN 315 in step 320. The UE 305 establishes a radio bearer for a user plane for the RNC 310 in step 325, and shares a ciphering key, among others, through security association with the RNC 310 in step 330. In other words, the UE 305 is in a connected state in which all conditions necessary for instant data transmission have been satisfied, except for actual radio resources.

If a packet call setup control message is generated in the UE 305 in the connected state in step 335, the UE 305 performs a CELL UPDATE procedure in order to receive radio resources in step 340, and transmits the packet call setup control message through the radio bearer and lu bearer in step 345. Through the CELL UPDATE procedure, transport and physical channels related to the radio bearer are established in the UE 305.

The physical channel, the transport channel, and the radio bearer must all be established for an RNC and a UE to transmit/receive data. The physical channel connects a code channel, and the transport channel connects a Medium Access Control (MAC) layer to a physical layer. The transport channel is established to have proper channel coding, transmission period, and packet size, among others, according to various levels of Quality of Services (QoS). The radio bearer includes link layer entities established in order to process upper layer data according to required QoS, such as a Radio Link Control (RLC) entity and a Packet Data Convergence Protocol (PDCP) entity. The setup of the physical channel in the UE represents that a specific channel code has been allocated to the UE, the setup of the transport channel represents that the processor of a physical layer has been established, and the setup of the radio bearer represents that the link layer entities such as RLC and PDCP entities have been established. The radio transport channel and the physical channel have not been established for a UE in a CELL_PCH state or a URA_PCH state, which represents that radio resources have not been actually allocated to the UE.

In the exemplary embodiment of the present invention, as with a packet call setup control message, a UE dealing with data is not shifted to an idle state. The UE maintains a connected state, specifically, a URA₋PCH state or a CELL_PCH state, wherein the data is irregularly generated but must be very rapidly transmitted.

When a UE is in a connected state such as a URA_PCH state or a CELL_PCH state, radio resources are not consumed, but the storage space of a network node such as an RNC or an SGSN for managing the connected state of the UE is consumed. This is because the basic information (for example ciphering key) of the UE is stored in the network node when the UE is in the connected state. Accordingly, it is impossible and is not preferred to cause all UEs to be in a connected state, the UEs receiving a packet call service.

A UE provides a network with corresponding control information so that the network can cause only a UE to be in the connected state, wherein the UE may have user data that must be rapidly transmitted/received.

In more detail, it can be predetermined that a service sensitive to call setup delay denotes a packet call service generating user data that is irregularly generated but must be rapidly transmitted. When the radio bearer and link layer entities are established for a user plane related to the service sensitive to call setup delay, a UE transfers a user plane setup message (for example a packet call setup message) including specific control information to a network. Once the network receives the user plane setup message including the control information and establishes a user plane including the radio bearer and link layer entities, the network does not release the user plane even when user data is not transmitted/received through the user plane during a predetermined time period. In a state in which the user plane has not been released, the UE is always in a connected state. Accordingly, if data related to the user plane is generated, the UE can rapidly transmit the data through the user plane.

For example, the user data that is irregularly generated but must be rapidly transmitted may include a VoIP call setup message, a PoC call setup message and a PoC traffic packet. In a PoC service, a plurality of users communicate with one another. That is, once one user acquires transmission permission under the control of a server and transmits voice data, the voice data is transmitted to the other users. Specifically, the PoC service is sensitive to setup delay. This is because a user sends a message requesting the transmission permission, and waits for a response for the message. Accordingly, the message requesting the transmission permission must be transmitted as soon as possible.

According to an exemplary implementation, the user data that is irregularly generated but must be rapidly transmitted will be referred to as specific user data. First, a UE activates a Packet Data Protocol (PDP) context in order to open a session for a packet call. Activating the PDP context represents that call information related to the session is stored in the PDP context of a UE and an SGSN, and a bearer which will process the session is established between the UE and the SGSN. For example, the information stored in the PDP context may include required QoS information of a session, among others. As a result, activating the PDP context has the same meaning as doing the necessary preparations for providing the session.

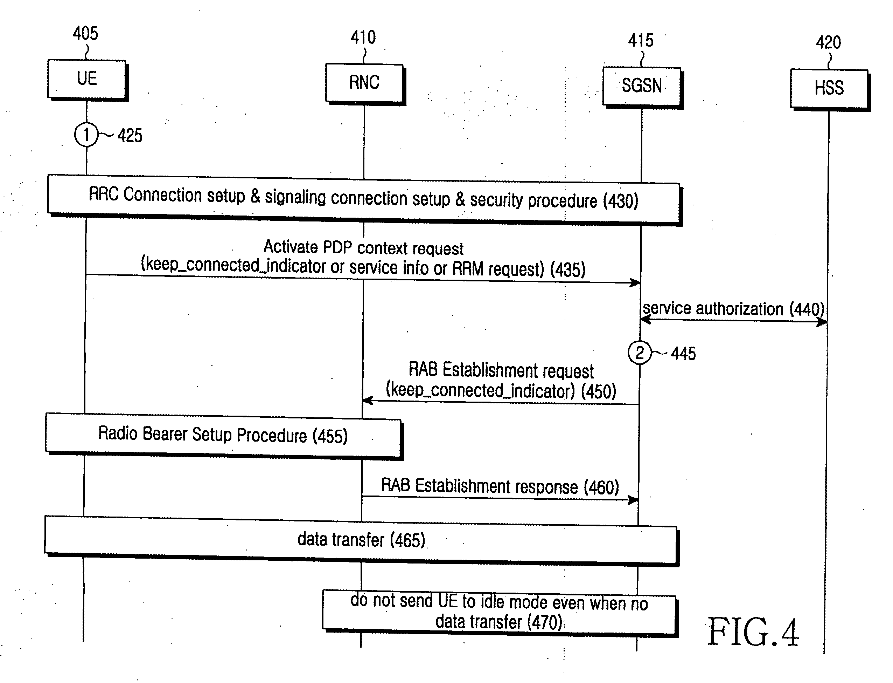

The operation of an exemplary embodiment of the present invention will be described in more detail with reference to FIG. 4.

Referring to FIG. 4, a UE 405 establishes a session for a packet call generating specific user data in step 425. In step 430, the UE 405, an RNC 410 and an SGSN 415 perform RRC connection setup, signaling connection setup, and a security procedure, among others.

In step 435, the UE 405 transmits an activate PDP context request message to the SGSN 415. The request message includes required QoS information of a PDP context to be activated, among others. Further, the request message includes control information representing whether the PDP context to be activated is related to a session generating specific user data. A network and a service provider can inform in advance a UE of a session in which specific user data is generated. According to an exemplary implementation, it is necessary for a network to strictly manage the qualification of specific user data. For example, a network and a service provider allocate the qualification of specific user data only to a PoC call setup message. Accordingly, the UE determines if specific user data defined by a network and a service provider is generated in the PDP context to be activated. If the specific user data is generated, the UE requests the network to cause the UE to maintain a connected state. The determination of whether a UE not performing data transmission/reception during a predetermined time period will enter an idle state is managed through Radio Resource Management (RRM) by an RNC, among others, the setup of the control information by the UE may be considered as requesting a network to provide a special RRM.

The control information includes the following meanings:
- since the PDP context to be activated corresponds to the session generating the specific user data, the control information can be interpreted as service information related to a service;
- the control information requests that a UE is not allowed to enter an idle state before the PDP context to be activated is removed. Accordingly, the control information can be interpreted as information requesting a network to perform a specific operation; and
- the control information requests application of a special RRM for the PDP context to be activated. Accordingly, the control information can be interpreted as information requesting a network to provide the special RRM.

For example, the control information includes a flag of one bit representing true or false for the meanings. In another example, the control information includes a plurality of subdivided bits. For example, the control information includes service-related information having a plurality of code points as shown in Table 1 below.

**Table 1**

| Code point | Meaning |
|---|---|
| 0 | Service generating specific user data |
| 1 | Service not generating specific user data |
| .. | .. |

Table 2 below illustrates an example of control information including a plurality of code points used for requesting a special operation of a network or a special RRM.

**Table 2**

| Code point | Meaning of special RRM |
|---|---|
| 0 | Requesting that a UE is not allowed to enter an idle state before PDP context is removed even when there is no data transmission/reception |
| 1 | Requesting application of gating for a service to be activated |
| 2 | No special requirements |
| .. | .. |

In Table 2, the gating denotes a technique for increasing battery use time of a UE by applying Discontinuous Transmission or Discontinuous Reception (DTX/DRX) to control and data channels on a radio channel. The gating is more effective for a service in which data transmission/reception is discontinuous and intermittent. A UE informs a network of a service, to which the gating is to be applied, through the control information.

According to an exemplary implementation, control information as service-related information will be referred to as service_info, control information as information requesting a network to cause a UE to maintain a connected state will be referred to as keep_connected _indicator, and control information as information requesting a network to provide a special RRM will be referred to as RRM_request. Accordingly, the control information can be referred to as keep_connected_indicator/service_info/RRM_request. This is for indicating that the control information has various meanings as described above.

After the activate PDP context request message is received in step 435, the SGSN 415 performs service authorization for a Home Subscriber Server (HSS) 420 in order to determine if it is possible to provide the UE with the required QoS included in the request message, in step 440. If the activate PDP context request message includes the control information, such as keep connected indicator/service info/RRM request, the keep_connected_indicator/service_info/RRM _request may be used as a parameter for the service authorization.

If the service authorization is successfully performed, the SGSN 415 establishes a PDP context for the UE 405 in step 445, and transmits a Radio Access Bearer (RAB) establishment request message to the RNC 410 in order to establish a bearer for the PDP context in step 450. The RAB is a bearer for transmitting/receiving data related to the session, which includes a radio bearer and a lu bearer. Typically, the RAB establishment request message includes QoS parameters to be applied to the bearers, together with the keep_connected_indicator/service_infb/RRM_request.

In step 455, the RNC 410 performs a radio bearer setup procedure for the UE 405. If the radio bearer setup procedure is completed, the RNC 410 transmits a RAB establishment response message to the SGSN 415 in order to report the completion of the bearer setup in step 460. In step 465, data is transmitted/received through the set bearer.

The most general RRM for a packet service releases a radio channel for a session having no data transmission. Typically, the SGSN 415 and the RNC 410 perform the following RRM operation for a session for a packet service.

When there is no data transmission/reception in a session during a predetermined time period, the SGSN 415 releases the bearer set for the session. In other words, the SGSN 415 (re)operates a timer whenever data transmission/reception is detected according to sessions, and releases the RAB of the session if data transmission/reception is not detected until the timer expires.

When there is no data transmission/reception in the RAB during a predetermined time period, the RNC 410 releases radio transmission resources established for the RAB. If another RAB does not exist in the UE 405, the UE 405 enters a CELL_PCH state or a URA_PCH state. When there is no data transmission/reception in the CELL_PCH state or the URA_PCH state during a predetermined time period, the RNC 410 can request the SGSN 415 to release the RAB. As a result, the release of the RAB causes the UE 405 to enter an idle state.

When the keep_connected _indicator/service - info/RRM _request for the session represents a request to prevent a UE from entering an idle state before the PDP context is removed, or represents a service capable of generating specific user data, the SGSN 415 sets a timer for monitoring data transmission/reception state of the session to have a value greater than a typical value, such as a value in a service not generating the specific user data, in step 470. According to an exemplary implementation, the SGSN 415 sets the timer value to be an actual infinite, thereby preventing the RAB from being released for the session. Herein, the actual infinite may represent a great value set so that the RAB is prevented from being released while performing a service. In step 470, the RNC 410 sets a timer for supervising a shift procedure from a PCH state to an idle state to have a value greater than a typical value, or sets the timer value to be an actual infinite, thereby preventing the RAB from being released.

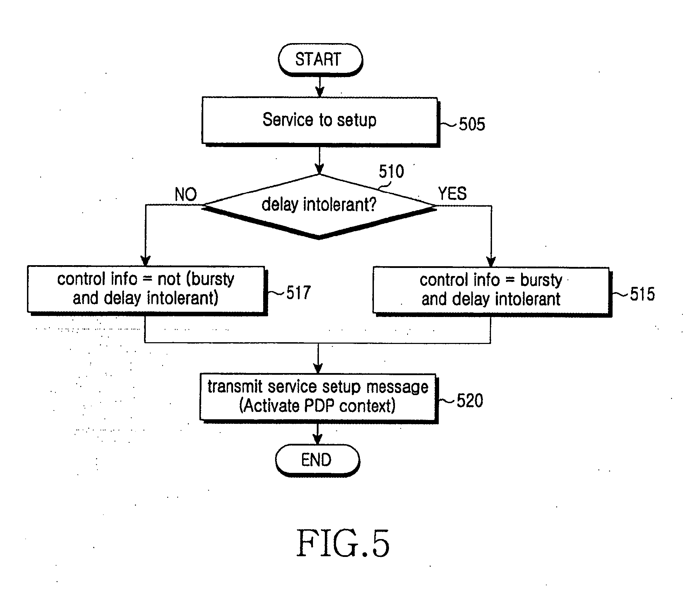

FIG. 5 is a flow diagram illustrating an operation of a UE according to an exemplary embodiment of the present invention.

Referring to FIG. 5, the UE determines whether to establish a service for a packet call in step 505, and determines whether the service generates user data that is irregularly generated but must be rapidly transmitted, such as specific user data, in step 510. In step 510, the UE determines if the service generates the specific user data according to criteria preset by a network. If the service generates the specific user data, step 515 is performed. Otherwise, step 517 is performed.

In step 515, the UE establishes control information representing that the specific user data is generated in the service. In step 517, the UE establishes the control information representing that the specific user data is not generated in the service. In step 520, the UE transmits a user plane setup message, such as an activate PDP context request message, to a network in order to request a packet call for the service. The control information is included in the user plane setup message and transmitted.

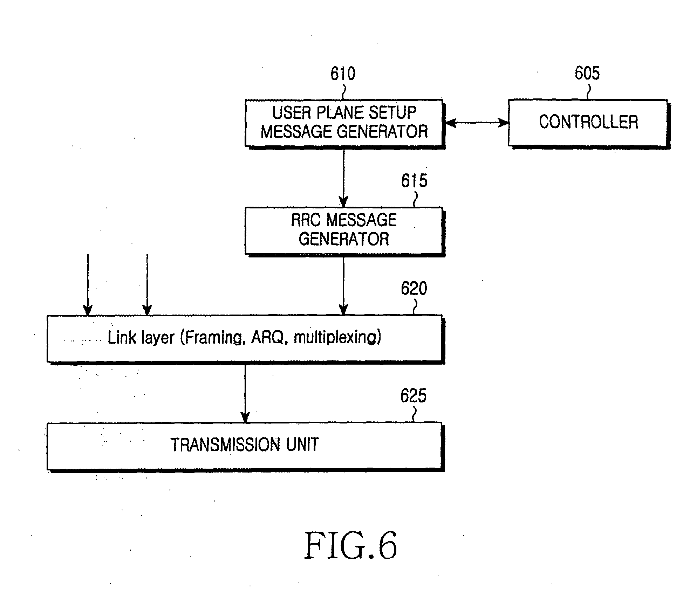

FIG. 6 is a block diagram illustrating the structure of a transmitter according to an exemplary embodiment of the present invention. As illustrated in FIG. 6, the transmitter is provided to a UE, which includes a controller 605, a user plane setup message generator 610, an RRC message generator 615, a link layer processor 620 and a transmission unit 625.

Referring to FIG. 6, the controller 605 sets control information to have a proper value according to whether a service to be established generates predetermined specific user data, and transfers the control information to the user plane setup message generator 610. The user plane setup message generator 610 generates a user plane setup message when it is necessary to establish a new session for the service, and transmits the user plane setup message to the RRC message generator 615. When a session for the service generating the specific user data is established, the user plane setup message includes the control information representing that the session generates the specific user data.

After receiving a control message generated from au upper layer such as the user plane setup message generator 610, the RRC message generator 615 converts the received control message to an RRC message and transfers the RRC message to the link layer processor 620. The link layer processor 620 frames data including the RRC message transferred from the upper layer to have a size suitable for transmission through a radio channel, and includes a RLC entity and a PDCP entity in order to provide reliable transmission through Automatic Repeat request (ARQ), and multiplexing, among others. The transmission unit 625 transmits the user data or control message framed by the link layer processor 620 through a physical channel.

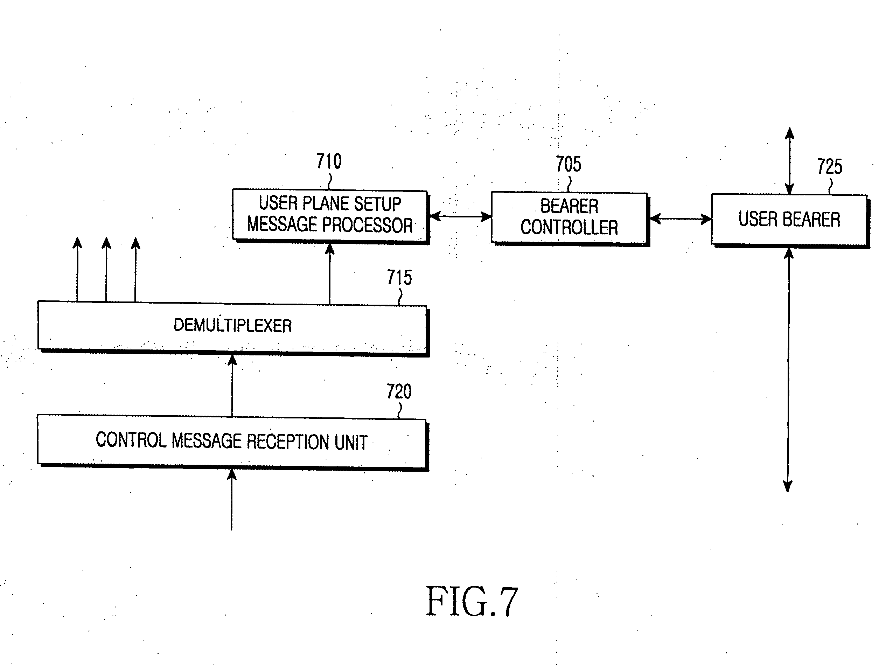

FIG. 7 is a block diagram illustrating the structure of a receiver according to an exemplary embodiment of the present invention. As illustrated in FIG. 7, the receiver is provided to both an SGSN and an RNC, respectively, which includes a user plane setup message processor 710, a bearer controller 705, a user bearer 725, a demultiplexer 715 and a control message reception unit 720.

Referring to FIG. 7, the control message reception unit 720 receives a control message from a UE or an SGSN. The received control message is demultiplexed by the demultiplexer 715 and then transferred to a proper upper layer. When the control message includes a user plane setup message, the user plane setup message is transferred from the demultiplexer 715 to the plane setup message processor 710.

The user plane setup message processor 710 interprets information included in the user plane setup message and provides the information to the bearer controller 705. This facilitates the establishment of the user bearer 725. The user bearer 725 denotes a bearer through which user data is transmitted/received. In an SGSN, the user bearer 725 denotes a RAB. In an RNC, the user bearer 725 denotes a physical channel/a transport channel/a radio bearer, among others.

The bearer controller 705 controls the user bearer 725 according to the control information included in the user plane setup message. If the control information indicates that the user bearer 725 is a bearer generating predetermined specific user data, the bearer controller 705 of an SGSN and an RNC operates as follows.

The bearer controller 705 of the SGSN can perform one of the two operations:

First, the bearer controller 705 does not remove the user bearer 725 before a PDP context related to the user bearer 725 is removed; and

Second, the bearer controller 705 operates a second timer whenever user data is transmitted/received, and removes the user bearer RAB if there is no user data transmission/reception until the second timer expires. The second timer is set for a bearer generating specific user data. The bearer controller 705 of the SGSN operates a first predetermined timer for a bearer that does not generate the specific user data whenever user data is transmitted/received. The bearer controller 705 also removes the user bearer if there is no user data transmission/reception until the first timer expires. The first and second timers supervise the release of the user bearer. The second timer has a value greater than that of the first timer in order to keep the user bearer generating the specific user data for a longer time.

The bearer controller 705 of the RNC does not request the SGSN to release the RAB until the RAB is released by the SGSN even when there is no data transmission/reception in the RAB. That is, the bearer controller 705 keeps the RAB until the RAB is released by the SGSN.

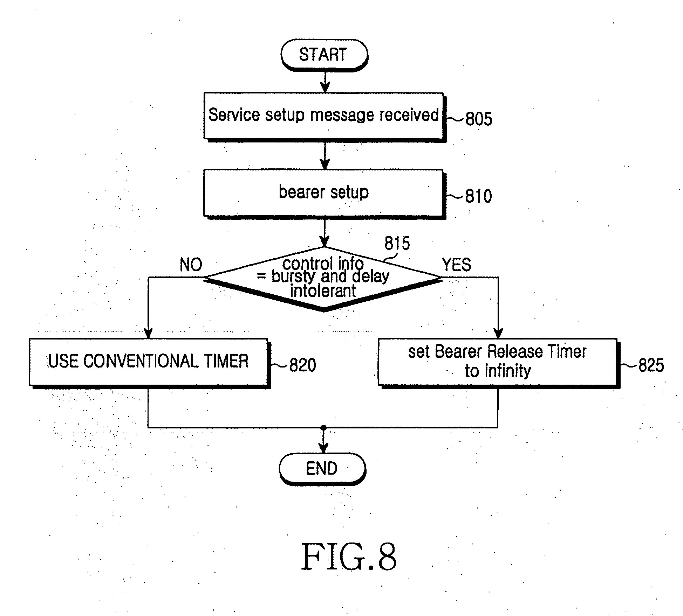

FIG. 8 is a flow diagram illustrating the operation of an SGSN according to an exemplary embodiment of the present invention.

Referring to FIG. 8, in step 805, the SGSN receives a user plane setup message from an RNC, and establishes a user plane through a user authorization procedure with a HSS of a UE related to the user plane setup message. If the user authorization has been successfully performed, the SGSN establishes a user plane for the UE in step 810.

In step 815, the SGSN confirms control information included in the user plane setup message. If the control information indicates that predetermined specific user data is transmitted/received through the user plane, step 825 is performed. Otherwise, step 820 is performed.

In step 820, the SGSN manages the user plane by using a first relatively short duration timer because typical user data is transmitted/received through the user plane, instead of the specific user data.

In step 825, the SGSN manages the user plane by using a second relatively long duration timer to prevent the release of the user plane because the specific user data is transmitted/received through the user plane, wherein the specific user data is intermittently generated but must be rapidly transmitted/received. This can be achieved through an operation for setting the value of the second timer to be infinite in order to determine whether to release a corresponding bearer with reference to the data transmission/reception state of the user plane, etc.

According to an exemplary embodiment of the present invention, the existence or absence of a packet call service sensitive to call setup delay is reported to a network, and a UE using the packet call service is caused to maintain a connected state, so that restart delay of the packet call service can be minimized. Consequently, it is possible to improve the QoS felt by users.

While the present invention has been shown and described with reference to certain exemplary embodiments thereof, it will be understood by those skilled in the art that various changes in form and details may be made therein without departing from the scope and spirit of the invention as defmed by the appended claims and their equivalents.

## Claims

1. A call setup method for minimizing call setup delay by a UE in a mobile telecommunications system, the method comprising:
determining by the UE if the requested service comprises a service sensitive to call setup delay if call setup for a packet call service is requested;
establishing control information representing that the packet call service is sensitive to the call setup delay if the requested packet call service comprises the service sensitive to the call setup delay; and
transmitting a request message requesting the call setup to a network, the request message comprising the control information.

2. The method as claimed in claim 1, wherein the control information comprises service-related information representing that the requested packet call service comprises the service sensitive to the call setup delay.

3. The method as claimed in claim 1, wherein the control information comprises an indicator of one bit requesting the network to cause the UE to maintain a connected state even when there is no data transmission/reception related to the packet call service.

4. The method as claimed in claim 1, wherein the control information comprises Radio Resource Management (RRM) request information requesting the network to provide a RRM for the UE.

5. The method as claimed in claim 1, wherein the service sensitive to the call setup delay comprises a service generating at least one of a Voice over IP (VoIP), a Push to talk over Cellular (PoC) call setup message, and a PoC traffic packet.

6. The method as claimed in claim 1, wherein the request message comprises an activate Packet Data Protocol (PDP) context request message requesting setup of a PDP context for the call setup.

7. A call setup method for minimizing call setup delay by a network node in a mobile telecommunications system, the method comprising:
receiving a request message requesting call setup for a packet call service from a UE;
establishing a user bearer for transmitting/receiving user data of the packet call service;
determining if the requested packet call service comprises a service sensitive to call setup delay according to control information comprised in the request message; and
maintaining the user bearer until release of the requested packet call service is required even when there is no data transmission/reception related to the packet call service if the requested packet call service comprises the service sensitive to the call setup delay.

8. The method as claimed in claim 7, wherein the control information comprises service-related information representing that the requested packet call service comprises the service sensitive to the call setup delay.

9. The method as claimed in claim 7, wherein the control information comprises an indicator of one bit requesting the network to cause the UE to maintain a connected state even when there is no data transmission/reception related to the packet call service.

10. The method as claimed in claim 7, wherein the control information comprises Radio Resource Management (RRM) request information requesting the network to provide a RRM for the UE.

11. The method as claimed in claim 7, wherein the service sensitive to the call setup delay comprises a service generating at least one of a Voice over IP (VoIP), a Push to talk over Cellular (PoC) call setup message, and a PoC traffic packet.

12. The method as claimed in claim 7, wherein the request message comprises an activate Packet Data Protocol (PDP) context request message requesting setup of a PDP context for the call setup.

13. The method as claimed in claim 7, wherein, in the step of maintaining the user bearer, a timer for managing release of the user bearer is set to have a value greater than that used when the requested packet call service is not the service sensitive to the call setup delay.

14. A terminal apparatus for minimizing call setup delay in a mobile telecommunications system, the terminal apparatus comprising:
a controller for, if call setup for a packet call service is requested, determining if the requested service comprises a service sensitive to call setup delay, and, if the requested packet call service comprises the service sensitive to the call setup delay, establishing control information representing that the packet call service is sensitive to the call setup delay;
a message generator for generating a request message requesting the call setup, and inserting the control information into the request message; and
a transmission unit for transmitting the request message to a network.

15. The terminal apparatus as claimed in claim 14, wherein the control information comprises service-related information representing that the requested packet call service comprises the service sensitive to the call setup delay.

16. The terminal apparatus as claimed in claim 14, wherein the control information comprises an indicator of one bit requesting the network to cause the UE to maintain a connected state even when there is no data transmission/reception related to the packet call service.

17. The terminal apparatus as claimed in claim 14, wherein the control information comprises Radio Resource Management (RRM) request information requesting the network to provide a RRM for the UE.

18. The terminal apparatus as claimed in claim 14, wherein the service sensitive to the call setup delay comprises a service generating at least one of a Voice over IP (VoIP), a Push to talk over Cellular (PoC) call setup message, and a PoC traffic packet.

19. The terminal apparatus as claimed in claim 14, wherein the request message comprises an activate Packet Data Protocol (PDP) context request message requesting setup of a PDP context for the call setup.

20. A network node apparatus for minimizing call setup delay in a mobile telecommunications system, the network node apparatus comprising:
a reception unit for receiving a control message from a UE, and acquiring a request message requesting call setup for a packet call service, the control message comprising the request message;
a message processor for interpreting the request message; and
a bearer controller for establishing a user bearer for transmitting/receiving user data of the packet call service according to the request message, determining if the requested packet call service comprises a service sensitive to call setup delay according to control information comprised in the request message, and, if the requested packet call service comprises the service sensitive to the call setup delay, maintaining the user bearer until release of the requested packet call service is required even when there is no data transmission/reception related to the packet call service.

21. The network node apparatus as claimed in claim 20, wherein the control information comprises service-related information representing that the requested packet call service comprises the service sensitive to the call setup delay.

22. The network node apparatus as claimed in claim 20, wherein the control information comprises an indicator of one bit requesting the network to cause the UE to maintain a connected state even when there is no data transmission/reception related to the packet call service.

23. The network node apparatus as claimed in claim 20, wherein the control information comprises Radio Resource Management (RRM) request information requesting the network to provide a RRM for the UE.

24. The network node apparatus as claimed in claim 20, wherein the service sensitive to the call setup delay comprises a service generating at least one of a Voice over IP (VoIP), a Push to talk over Cellular (PoC) call setup message, and a PoC traffic packet.

25. The network node apparatus as claimed in claim 20, wherein the request message comprises an activate Packet Data Protocol (PDP) context request message requesting setup of a PDP context for the call setup.

26. The network node apparatus as claimed in claim 20, wherein the bearer controller sets a timer for managing release of the user bearer to have a value greater than that in a case in which the requested packet call service is not the service sensitive to the call setup delay.

27. A terminal apparatus for minimizing call setup delay in a mobile telecommunications system, the terminal apparatus comprising:
a controller for determining if a requested service comprises a service sensitive to call setup delay and for establishing control information representing that a call service is sensitive to the call setup delay;
a message generator for generating a request message requesting the call setup, and inserting the control information into the request message; and
a transmission unit for transmitting the request message to a network.

28. The terminal apparatus as claimed in claim 27, wherein the control information comprises service-related information representing that the requested call service comprises the service sensitive to the call setup delay.

29. The terminal apparatus as claimed in claim 27, wherein the control information comprises an indicator of one bit requesting the network to cause the UE to maintain a connected state even when there is no data transmission/reception related to the call service.

30. The terminal apparatus as claimed in claim 27, wherein the control information comprises Radio Resource Management (RRM) request information requesting the network to provide a RRM for the UE.

31. The terminal apparatus as claimed in claim 27, wherein the service sensitive to the call setup delay comprises a service generating at least one of a Voice over IP (VoIP), a Push to talk over Cellular (PoC) call setup message, and a PoC traffic packet.

32. The terminal apparatus as claimed in claim 27, wherein the request message comprises an activate Packet Data Protocol (PDP) context request message requesting setup of a PDP context for the call setup.
